# EUROPÄISCHE PATENTSCHRIFT

(11) **EP 0 928 048 B1**
(45) Veröffentlichungstag und Bekanntmachung des Hinweises auf die Patenterteilung: **17.04.2002**
(21) Anmeldenummer: 98123839.7
(22) Anmeldetag: 15.12.1998
(51) Int. Cl.: H01R 13/66, H01R 24/08, H02G 3/18

(54) **Multifunktionale Steckdose**
Multifunctional socket
Prise femelle multifunction

(30) Priorität: 30.12.1997 DE 29722966 U
(43) Veröffentlichungstag der Anmeldung: 07.07.1999
(73) Patentinhaber: SIEMENS AKTIENGESELLSCHAFT, 80333 München (DE)
(72) Erfinder: Luber, Georg Dipl.-Ing. (FH), 93158 Teublitz (DE); Weissberger, Günther Dipl.Ing. (FH), 93309 Kelheim (DE)

(56) Entgegenhaltungen:
- DE-A- 2 637 554
- DE-A- 3 227 770
- DE-A- 3 544 197
- DE-A- 19 520 366
- DE-A- 19 525 214
- GB-A- 2 045 433

## Beschreibung

Die Erfindung bezieht sich auf eine multifunktionale Steckdose, die einerseits in einem Steckernäpfchen Steckeraufnahmen für Außenleiter und bei Systemen mit Neutralleiter eine Steckerstiftaufnahme auch für Neutralleiter aufweist und andererseits Verbindungsmittel für zumindest einen Kommunikationsleiter hat, der eine Kommunikationsleitung über die Steckdose und einen einzuführenden Stecker bildet. Derartige Steckdosen sind in den verschiedenartigsten Ausführungen bekannt (beispielsweise DE-A1-32 27 770).

Bei der bekannten Steckvorrichtung aus Steckdose und Stecker sind in Bohrungen der Steckerstifte Lichtwellenleiter untergebracht, die zu fluchtenden Lichtwellenleitern in Steckerstiftaufnahmen in einer Steckdose eine Kommunikationsleitung herstellen können.

Bei derartigen Steckdosen sind entweder Spezialanfertigungen erforderlich, oder innerhalb eines Systems von Steckdosen sind für die Kommunikationsausführung das Steckernäpfchen, auch Zentralplatte genannt, auszuwechseln.

Der Erfindung liegt die Aufgabe zugrunde, eine multifunktionale Steckdose zu entwickeln, die für die Kommunikationsausführung keine Änderung wesentlicher Teile erfordert.

Die Lösung der geschilderten Aufgabe erfolgt nach der Erfindung durch eine multifunktionale Steckdose nach Anspruch 1. Hierbei ist das Steckernäpfchen mit zumindest einer Schraube an einem Steckdosensockel befestigt, die in einer Bohrung einen Kommunikationsleiter aufnimmt, der in die Kommunikationsleitung eingebunden ist. Beim Wechsel von der Normalausführung zur Kommunikationsausführung sind hierbei keine wesentlichen Teile auszuwechseln, es genügt, eine Schraube zum Befestigen des Steckernäpfchens gegen eine solche Schraube auszuwechseln, die in einer Bohrung einen Kommunikationsleiter, insbesondere einen Lichtwellenleiter, aufnimmt. Eine derartige Maßnahme kann fertigungsseitig oder auch nachträglich einfach vorgenommen werden.

In einer ersten Ausführung kann die Befestigungsschraube eine zylindrische Ausnehmung für den Kommunikationsleiter aufweisen, der sich bis zur Basis einer Schraubendreheraufnahme erstreckt. Es kann dann die Klinge eines üblichen Schraubendrehers eingesetzt werden.

In einer weiteren Ausführung kann die Schraube eine zylindrische Ausnehmung für den Kommunikationsleiter aufweisen, der sich bis zur Kopffläche des Schraubenkopfes erstreckt. Hierbei sind dann Schraubendreher mit einer mittig unterbrochenen Klinge einzusetzen.

Nach einer bevorzugten Ausführung ist die Befestigungsschraube zu ihrer Kopffläche hin mit einer konisch erweiterten Ausnehmung für den Kommunikationsleiter versehen. Hierbei kann auch unter dem Schraubenfuß der Kommunikationsleiter mit größerem Durchmesser hervorstehen. Eine derartige Ausführung hat den Vorteil, daß die Einbindung in eine Kommunikationsleitung mit größeren und sichereren Koppelflächen erfolgen kann. Dies ist bei Lichtwellenleitern besonders günstig.

Die Erfindung soll nun anhand von in der Zeichnung grob schematisch wiedergegebenen Ausführungsbeispielen näher erläutert werden:
- In FIG 1: ist das Steckernäpfchen einer Steckdose mit eingesetzter zentraler Befestigungsschraube im Querschnitt veranschaulicht.
- In FIG 2: ist das Steckernäpfchen nach FIG 1 in Aufsicht dargestellt.
- In FIG 3: ist ein zum Steckernäpfchen nach FIG 1 passender Stecker verkleinert wiedergegeben.
- In den FIG 4-6: sind verschiedene Ausführungen für die Befestigungsschraube mit Kommunikationsleiter im Querschnitt wiedergegeben.
- In den FIG 7-9: sind zu den Befestigungsschrauben nach den FIG 4 - 6 die zugeordneten Aufsichten auf den Schraubenkopf dargestellt.

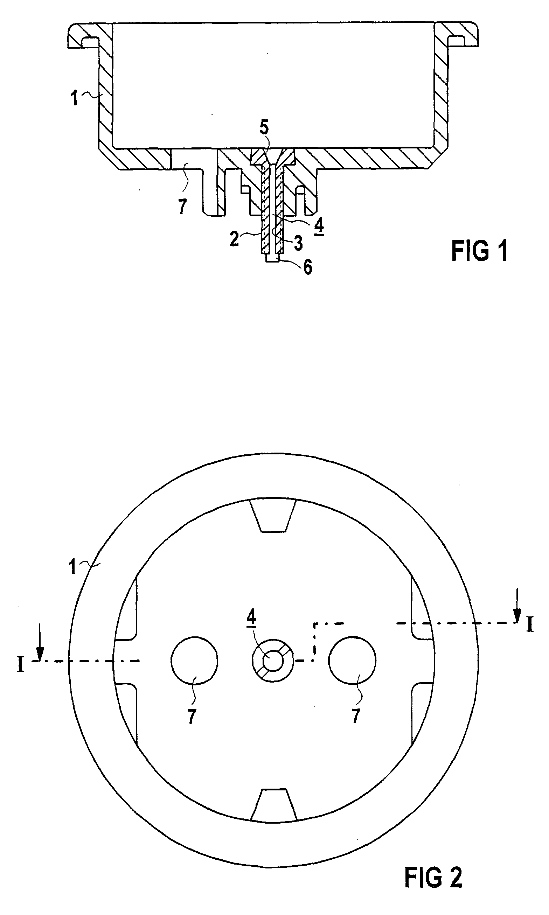

Die multifunktionale Steckdose kann in an sich bekannter Weise aufgebaut sein. Sie weist ein Steckernäpfchen 1 auf, das in der Normalausführung eine zentrale Befestigungsschraube aufweist und das in der Kommunikationsausführung nach FIG 1 eine zentrale Befestigungsschraube 2 mit einer Bohrung 3 für einen Kommunikationsleiter, insbesondere Lichtwellenleiter, aufweist. Die Befestigungsschraube verbindet das Steckernäpfchen in der Steckdose mit dem Steckdosensockel. Der Kommunikationsleiter 4 ist dann in eine Kommunikationsleitung im Sockel und bei eingestecktem Stecker eingebunden.

Im Ausführungsbeispiel nach FIG 1 weist die Befestigungsschraube 2 zu ihrer Kopffläche hin eine konisch erweiterte Ausnehmung 5 für den Kommunikationsleiter 4 auf, wobei dieser unter dem Schraubenfuß mit größerem Durchmesser bei 6 hervorsteht. Dadurch werden breite und gute Koppelflächen zur Verfügung gestellt. Durch das Auswechseln der Befestigungsschraube sind keine Änderungen am Steckdosensockel oder in der Zentralplatte erforderlich, um die Kommunikationsausführung zu erzielen.

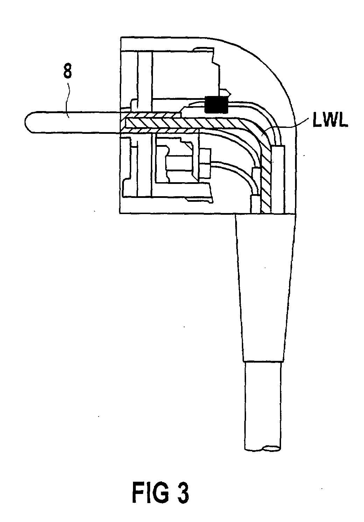

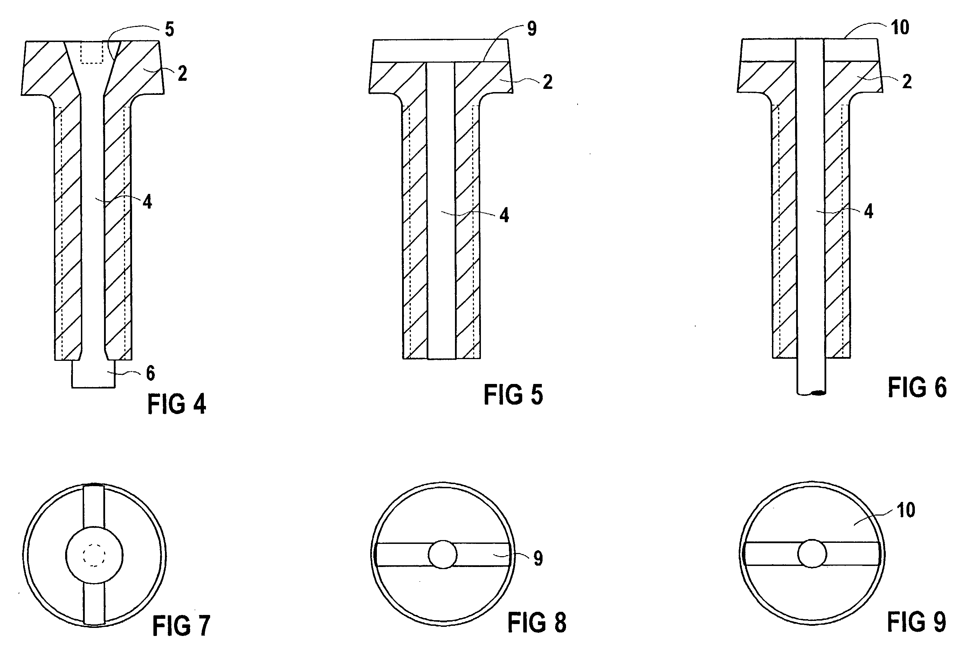

Die Befestigungsschraube, die in FIG 4 vergrößert wiedergegeben ist, kann in üblicher Weise aus Metall bestehen, was bei den Ausführungen nach den Figuren 5 und 6 sowie den zugeordneten Figuren 8 und 9 leicht möglich ist. Bei der an sich vorteilhaften Ausführung nach FIG 4 und 7 wird die Befestigungsschraube vorteilhaft aus Kunststoff gefertigt, der um den besonders geformten Kommunikationsleiter, insbesondere Lichtwellenleiter, gefertigt ist. Die besondere Formgebung ist dann wirtschaftlicher zu realisieren. Das Steckernäpfchen nach den Figuren 1 und 2 weist außer dem Kommunikationsleiter 4 noch Steckerstiftaufnahmen 7 für Steckerstifte 8 eines Steckers, man vergleiche FIG 3, auf. Verständlicherweise können auch übliche Schutzkontaktbügel eingesetzt werden.

Im Ausführungsbeispiel nach FIG 5 weist die Befestigungsschraube eine zylindrische Ausnehmung für den Kommunikationsleiter 4 auf, der sich bis zur Basis 9 einer Schraubendreheraufnahme erstreckt. In der Ausführung nach den Figuren 6 und 9 weist die Befestigungsschraube 2 eine zylindrische Ausnehmung für den Kommunikationsleiter 4 auf, der sich bis zur Kopffläche 10 des Schraubenkopfes erstreckt.

## Patentansprüche

1. Multifunktionale Steckdose, die einerseits in einem Steckernäpfchen (1) Steckeraufnahmen (7) für Außenleiter und bei Systemen mit Neutralleiter eine Steckerstiftaufnahme auch für Neutralleiter aufweist und andererseits Verbindungsmittel für zumindest einen Kommunikationsleiter (4) aufweist, der eine Kommunikationsleitung über die Steckdose und einen einzuführenden Stecker bildet, **dadurch gekennzeichnet, daß** das Steckernäpfchen (1) mit zumindest einer Befestigungsschraube (2) an einem Steckdosensockel befestigt ist, die in einer Bohrung (3) den Kommunikationsleiter (4) aufnimmt.

2. Multifunktionale Steckdose nach Anspruch 1,
**dadurch gekennzeichnet,**
**daß** die Befestigungsschraube (2) eine zylindrische Ausnehmung für den Kommunikationsleiter aufweist, der sich bis zur Basis (9) einer Schraubendreheraufnahme erstreckt.

3. Multifunktionale Steckdose nach Anspruch 1,
**dadurch gekennzeichnet,**
**daß** die Befestigungsschraube (2) eine zylindrische Ausnehmung für den Kommunikationsleiter (4) aufweist, der sich bis zur Kopffläche (10) des Schraubenkopfes erstreckt.

4. Multifunktionale Steckdose nach Anspruch 1,
**dadurch gekennzeichnet,**
**daß** die Befestigungsschraube (2) zu ihrer Kopffläche hin eine konisch erweiterte Ausnehmung (5) für den Kommunikationsleiter aufweist, der unter dem Schraubenfuß mit größerem Durchmesser (6) hervorsteht.

## Claims

1. Multifunctional socket outlet, having on the one hand plug receptacles (7) in a connector cup (1) for outer conductors and, in systems with a neutral conductor, a pin receptacle for neutral conductors as well, and having on the other hand a means of connecting at least one communication conductor (4) which forms a communication lead via the socket outlet and an inserted plug, **characterised in that** the connector cup (1) is attached with at least one attaching screw (2) to a socket outlet base which receives the communication conductor (4) in a hole (3).

2. Multifunctional socket outlet in accordance with Claim 1, **characterised in that** the attaching screw (2) has a cylindrical recess for the communication conductor, which extends to the base (9) of a screwdriver slot.

3. Multifunctional socket outlet in accordance with Claim 1, **characterised in that** the attaching screw (2) has a cylindrical recess for the communication conductor (4) which extends to the surface (10) of the screw head.

4. Multifunctional socket outlet in accordance with Claim 1, **characterised in that** the attaching screw (2) has a recess (5) which extends conically towards the surface of its head for the communication conductor, which protrudes under the tip of the screw with a larger diameter (6).

## Revendications

1. Prise femelle multifonction, qui d'une part comporte, dans une cuvette (1) de connexion, des logements (7) de connexion pour des conducteurs externes et, pour des systèmes à conducteur neutre, également un logement de broche de connexion pour le conducteur neutre, et qui d'autre part comporte des moyens de raccordement pour au moins un conducteur (4) de communication, qui forme une ligne de communication passant par la prise femelle et par une prise mâle à introduire,
**caractérisée en ce que** la cuvette (1) de connexion est fixée sur un socle de prise femelle par au moins une vis (2) de fixation, qui reçoit dans un perçage (3) le conducteur (4) de communication.

2. Prise femelle multifonction suivant la revendication 1, **caractérisée en ce que** la vis (2) de fixation comporte pour le conducteur de communication un évidement cylindrique qui s'étend jusqu'à la base (9) d'un logement pour tournevis.

3. Prise femelle multifonction suivant la revendication 1, **caractérisée en ce que** la vis (2) de fixation comporte pour le conducteur de communication un évidement cylindrique qui s'étend jusqu'à la face (10) supérieure de la tête de vis.

4. Prise femelle multifonction suivant la revendication 1, **caractérisée en ce que** la vis (2) de fixation comporte un évidement (5) élargi coniquement vers sa face de tête, évidement qui est destiné au conducteur de communication qui dépasse sous le pied de la vis par un diamètre (6) plus grand.
